# EUROPÄISCHE PATENTANMELDUNG

(11) **EP 0 971 182 A1**
(43) Veröffentlichungstag der Anmeldung: **12.01.2000**
(21) Anmeldenummer: 98200889.8
(22) Anmeldetag: 09.07.1998
(51) Int. Cl.: F25B 30/02, F25B 1/02, F04B 35/00

(54) **Wärmepumpe mit neuartigem Verdichter**

(71) Anmelder: Stolz, Hans, 66399 Mandelbachtal (DE)
(72) Erfinder: Stolz, Hans, 66399 Mandelbachtal (DE)

(57) **Zusammenfassung**

Der Verdichter besteht im Prinzip aus einem Rohrsystem, das an einem Ende fest verschlossen ist. Das andere Ende mündet in einer Linearpumpe.

Das Rohr ist mit frostgeschütztem Wasser gefüllt.

Je nach Wassertemperatur ändert sich das Wasservolumen:
aufgrund der Anormalität des Wassers ist die Dichte bei 4° C am größten, das Volumen am kleinsten.

Bei Änderung der Wassertemperatur durch Eintauchen des Rohrsystems in den anderen Behälter dehnt sich das Wasser aus, das Volumen vergrößert sich und übt Druck auf den Kolben aus. Die Hublänge ist abhängig von der Temperaturänderung und der Länge des Rohrsystems.

Die Temperaturänderung kann alternativ auch dadurch erreicht werden, daß das Rohrsystem fest in einen Wasserbehälter getaucht wird, der zeitlich versetzt mit Wasser unterschiedlicher Temperatur gefüllt wird.

## Beschreibung

### Ausgangslage

Durch Sonneneinstrahlung und durch die Wärme, die bei jedem Energieverbrauch an die Umwelt abgegeben wird, steht in der Luft im Wasser und im Erdreich immer Wärme zur Verfügung.

Das Temperaturniveau dieser Wärme ist jedoch so niedrig, daß sie für Heizzwecke bisher nicht genutzt werden konnte. Mit einer Wärmepumpe ist das heute möglich. Die der Umwelt der Luft, dem Wasser oder Erdreich entzogene Wärme wird mit Hilfe der Wärmepumpe auf ein zum Heizen geeignetes Temperaturniveau gebracht.

Kompressions-Wärmepumpen werden entweder von einem Elektromotor angetrieben, dann heißen sie Elektrowärmepumpen, oder sie werden von einem Gas- oder Dieselmotor angetrieben, dann nennt man sie Gas- oder Dieselmotorwärmepumpen.

Von einem Ventilator wird Luft angesaugt und über einen Verdampfer (Wärmetauscher) geleitet. Der Verdampfer entzieht der Luft Wärme, die Luft kühlt dadurch ab.

Die so gewonnene Wärme wird im Verdampfer auf das Arbeitsmedium (Sicherheitskältemittel) übertragen.

Mit Hilfe eines elektrisch oder durch Gas- oder Dieselmotor angetriebenen Verdichters wird die aufgenommene Wärme durch Druckerhöhung auf ein höheres Temperaturniveau gepumpt und über einen Verflüssiger (Wärmetauscher) an das Heizwasser ab-gegeben.

Die Antriebsenergie (Strom, Gas oder Dieselöl) wird also nur eingesetzt, um die Wärme der Umwelt auf ein höheres Temperaturniveau anzuheben.

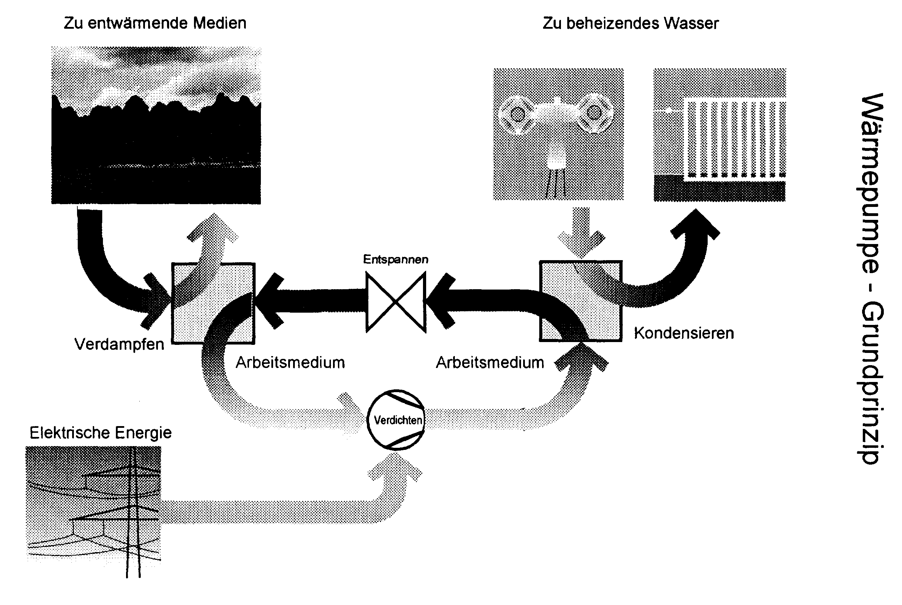

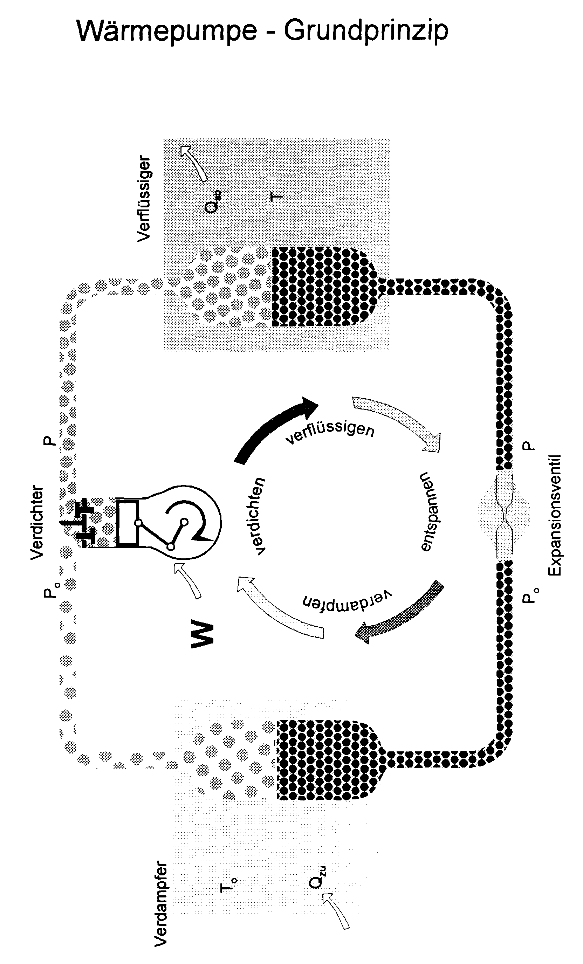

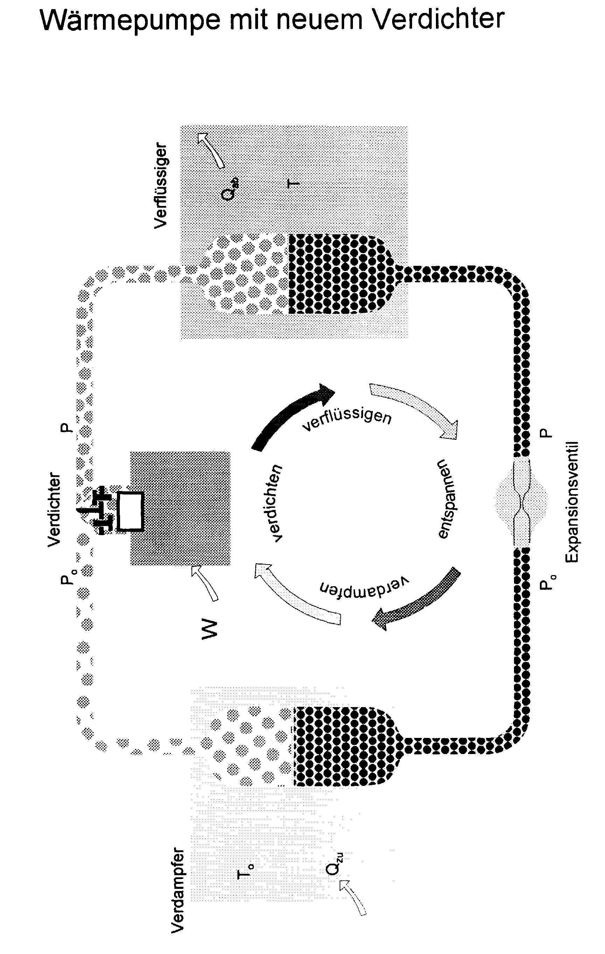

Allerdings ist die für den Verdichter aufgewendete Energie nicht gering. Je nach den Ausgangsbedingungen muß man davon ausgehen, daß für den Antrieb des Verdichters etwa 30 % der abgegebenen Wärmeenergie benötigt wird.
(siehe hierzu Zeichnungen 2, 3 und 4)

### Neuer Verdichter

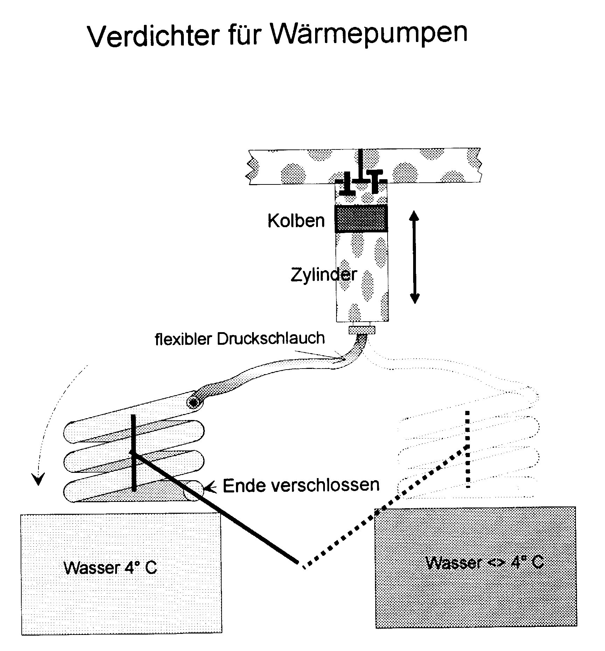

Durch den Einsatz des in Zeichnung 1 beschriebenen Verdichters wird die Zufuhr von elektrischer Energie (oder Energie in Form von fossilen Brennstoffen) auf einen Bruchteil reduziert.

Dies wird dadurch erreicht, daß die natürlich vorhandene Eigenschaft von Stoffen, das Volumen bei Wärmeveränderung zu verändern, ausgenutzt wird.

Im Falle von Wasser als Ausdehnungsstoff wirkt sich die *Anormalität des Wassers* positiv aus, d. h. es kann sowohl der Temperaturbereich oberhalb als auch unterhalb der Umkehrtemperatur von 4° Celsius benutzt werden, wenn im unteren Bereich durch geeignete Mittel der Frostschutz gewährleistet ist.

Der benötigte Druck in Höhe von 18 - 22 bar wird in einem Rohrsystem, das an einem Ende fest verschlossen ist, dessen anderes Ende in einer Linearpumpe endet, leicht erreicht.

Dazu muß lediglich die Temperatur des Wassers im Rohrsystem, von 4° C ausgehend, verändert werden.

Die Ausdehnungsweite ist abhängig von der Länge der Wassersäule im Rohrsystem und der Temperaturänderung.

Die Temperaturveränderung kann durch abwechselndes Eintauchen des Rohrsystems in zwei mit Wasser gefüllte Behälter mit unterschiedlicher Temperatur, als auch durch Wechsel des Wassers mit unterschiedlichernTemperaturen erfolgen (siehe Zeichnung 1).

### Gesamtkonzept und Energiebilanz

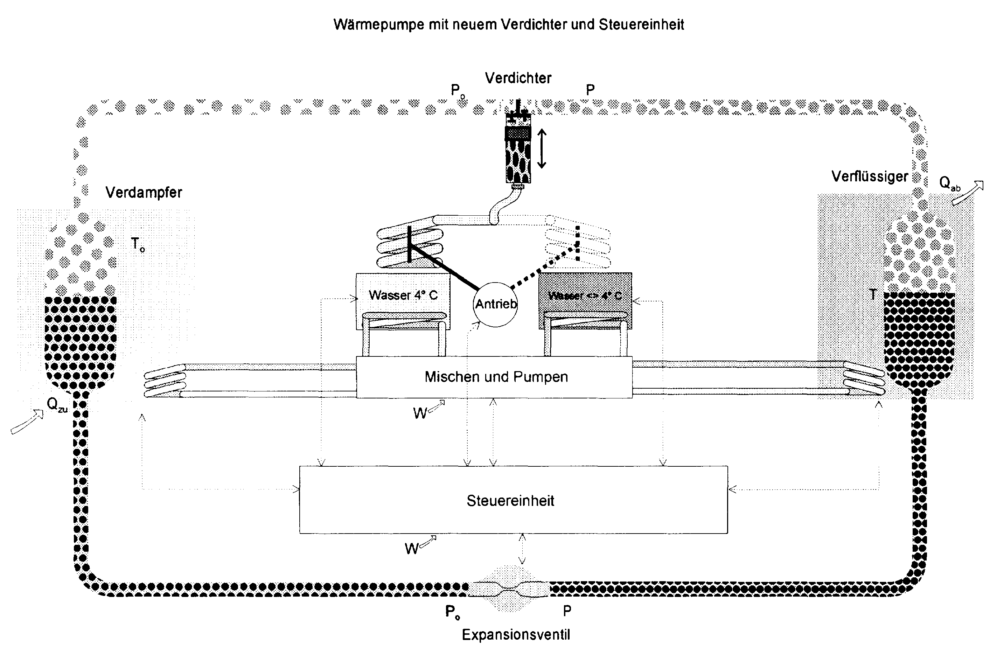

Durch die sinnvolle Integration des Verdichters in eine Wärmepumpenanlage (siehe Zeichnung 5) wird eine Anlage erreicht, die eine ungleich günstigere Leistungsziffer als eine Anlage mit Kompressor erreicht.

An Verlusten muß gerechnet werden:
⇒ Antriebsenergie für die Bewegung des Rohrsystems. Bei entsprechender Auswuchtung sind hier lediglich Reibungs- und Beschleunigungsverluste (die allerdings sehr gering sind) zu kompensieren.
⇒ Zur Temperaturnachregelung der Wasserbehälter über Wärmetauscher wird Pumpleistung benötigt. Durch entsprechend dimensionierte Leitungen kann die Leistungsaufnahme vermindert werden.
⇒ Elektrische Energie für die notwendige Steuereinheit.

## Patentansprüche

1. die Idee, einen Verdichter aus der Tatsache der Volumenveränderung von Stoffen als Folge von Wärmeveränderung zu realisieren

2. die Idee, den oben beschriebenen Verdichter an Stelle von Kompressoren in Kompressor - Wärmepumpen einzusetzen
